# EUROPÄISCHE PATENTSCHRIFT

(11) **EP 1 497 070 B1**
(45) Veröffentlichungstag und Bekanntmachung des Hinweises auf die Patenterteilung: **31.12.2008**
(21) Anmeldenummer: 04711336.0
(22) Anmeldetag: 16.02.2004
(51) Int. Cl.: B23K 9/10, B23K 9/073

(54) **VERFAHREN ZUR BEEINFLUSSUNG DES LICHTBOGENS BEIM LICHTBOGEN-SCHMELZSCHWEISSEN UND VORRICHTUNG ZUR DURCHFUHRUNG DES VERFAHRENS**
METHOD FOR INFLUENCING THE ARC DURING ARC FUSION WELDING AND DEVICE FOR CARRYING OUT THE METHOD
PROCEDE POUR INFLUENCER L'ARC ELECTRIQUE LORS D'UNE OPERATION DE SOUDAGE PAR FUSION A L'ARC ET DISPOSITIF POUR METTRE EN OEUVRE CE PROCEDE

(30) Priorität: 14.03.2003 DE 10311591
(43) Veröffentlichungstag der Anmeldung: 19.01.2005
(73) Patentinhaber: Hermann, Hans-Werner, 35614 Asslar (DE); Hermann, Steffen, 35614 Asslar (DE)
(72) Erfinder: Hermann, Hans-Werner, 35614 Asslar (DE); Hermann, Steffen, 35614 Asslar (DE)
(74) Vertreter: Haar, Lucas Heinz Jörn
(86) Internationale Anmeldenummer: PCT/DE2004/000283
(87) Internationale Veröffentlichungsnummer: WO 2004/080639

(56) Entgegenhaltungen:
- EP-A- 0 884 127
- GB-A- 1 314 683
- US-A- 4 201 906
- US-A- 4 447 702

## Beschreibung

Die Erfindung betrifft Verfahren zur Beeinflussung des Lichtbogens beim Lichtbogen-Schmelzschweißen unter Verwendung einer Stromquelle. Die Erfindung betrifft weiterhin Vorrichtungen zur Durchführung der Verfahren.

Zur Erzeugung von Schweißstrom sind Stromquellen mit einer Stromkonstantregelung bekannt, die zur Einstellung eines jeweils vorgegebenen maximalen Schweißstroms dient und fallende Stromspannungs-Kennlinien erzeugt. Die Stromkonstantregelung der bekannten Stromquellen wird vor der Durchführung eines Schweißprozesses auf den hierfür günstigsten Schweißstromgrenzwert eingestellt. Während des Schweißprozesses ist die Stromkonstantregelung bestrebt, den Schweißstrom unabhängig von der Elektrodenspannung auf dem eingestellten Grenzwert konstant zu halten. Für das MAG-Schweißen sind Stromquellen mit Konstantspannungsregelung bekannt. Dies führt zu einem niederohmigen Verhalten der Stromquelle gegenüber der Stromentnahme und hat zur Folge, daß sehr hohe Kurzschlußströme auftreten. Des weiteren wird der Lichtbogen ungünstig beeinflußt. Seine Fokussierung ist unzureichend; vorlaufendes Schweißbad kann nicht ausreichend durchdrungen werden, so daß Schweißfehler auftreten können.

Die Druckschrift EP 0 884 127 A1 beschreibt eine Stromversorgung für elektrisches Lichtbogenschweißen für Gleich- und Wechselspannung und einen Betrieb CV- oder CC-Modus, insbesondere für Unter-Pulver-Schweißen. Die Stromversorgung weist einen Controller auf, der im CV- oder CC-Modus betrieben werden kann. Im CC-Modus wird ein Konstant-Stromregler zur Steuerung der Ausgabe verwendet, während ein Konstant-Spannungsregler nicht eingesetzt wird. Im CV-Modus werden Konstant-Strom- und Konstant-Spannungs-Regler kaskadiert angeordnet, wobei der Ausgang der Konstant-Spannungs-Regeleinrichtung auf den Eingang des Stromreglers zur Festlegung der Soll-Stromstärke gegeben wird. Der Ausgang des Stromreglers wird zur Steuerung des Schweißstromes genutzt. Die Differenz zwischen Soll-Stromstärke und Ist-Stromstärke beeinflußt die durch die Thyristoren bereitgestellte Leistung.

In der Druckschrift EP 1 180 408 A2 wird ein Verfahren zum Schweißen mit einer Mehrzahl von Schweißstromquellen, die parallel geschaltet sind, dargestellt. Zur Vermeidung von konkurrierenden Stromquellen weist das Schweißsystem eine Konstant-Spannungs-Regeleinrichtung und eine Konstant-Strom-Regeleinrichtung auf, die über einen Verstärker miteinander verbunden sind. Ein Ausgang der Konstant-Spannungs-Regeleinrichtung ist mit der Schweißelektrode verbunden. Am anderen Ausgang der Konstant-Spannungs-Regeleinrichtung liegt ein Referenzsignal an, das abhängig von der Stromstärke am Schweißausgang ist. Dieses Referenzsignal wird durch den Verstärker verstärkt und auf den Eingang der Konstant-Stromquelle gegeben. Der Ausgang der Strom-Konstant-Regeleinrichtung ist ebenfalls mit der Schweißelektrode verbunden.

Der Erfindung liegt die Aufgabe zugrunde, Verfahren zur Beeinflussung des Lichtbogens beim Lichtbogen-Schmelzschweißen anzugeben, welche zu einem verbesserten Schweißergebnis führen. Es ist weiterhin Aufgabe der Erfindung, verbesserte Vorrichtungen zum Lichtbogenschweißen zu schaffen.

Die genannte Aufgabe wird hinsichtlich des Verfahrens durch die in Patentanspruch 1 sowie hinsichtlich der Vorrichtung durch die in Patentanspruch 4 angegebenen Merkmale gelöst. Vorteilhafte Ausgestaltungen der Verfahren sind in den Ansprüchen 2 und 3 und der Vorrichtungen in den Ansprüchen 5 und 6 angegeben.

Das erfindungsgemäße Verfahren zur Beeinflussung des Lichtbogens beim Lichtbogen-Schmelzschweißen umfaßt eine Stromquelle mit einer als Stromsteller oder Stromregelung ausgebildeten Einrichtung, die fallende Strom/Spannungs-Kennlinien erzeugt und einen Sollwerteingang zur Einstellung des Schweißstromgrenzwerts aufweist. Das Verfahren sieht eine Konstantspannungs-Regeleinrichtung vor, welche die Elektrodenspannung an der Schweißelektrode erfaßt und in Abhängigkeit von der Elektrodenspannung ein Stellsignal erzeugt, das dem Sollwerteingang der Einrichtung der Stromquelle als Sollwert aufgegeben wird, wobei bei einer Abweichung der Elektrodenspannung von dem an der Konstantspannungs-Regeleinrichtung eingestellten Sollwert der Sollwert der Einrichtung derart beeinflusst wird, dass bei Überschreitung des Sollwerts der Elektrodenspannung der den Schweißstrom nach oben begrenzende Grenzwert gesenkt und bei Unterschreitung der Elektrodenspannung der Schweißstromgrenzwert erhöht wird.

Durch die erfindungsgemäße Verfahren wird bei einer Abweichung der Elektrodenspannung von dem an der Konstantspannungs-Regeleinrichtung eingestellten Sollwert der Sollwert des Stromstellers oder der Sollwert der Stromregelung derart beeinflußt, daß bei Überschreitung des Sollwerts der Elektrodenspannung der den Schweißstrom nach oben begrenzende Grenzwert gesenkt und damit die am Lichtbogen verfügbare Energie verringert und bei Unterschreitung der Elektrodenspannung der Schweißstromgrenzwert erhöht und damit die dem Lichtbogen zuführbare Energie vergrößert wird. Die dem Stromsteller oder der Stromregelung überlagerte Konstantspannungsregelung hat also das Bestreben, durch Änderung des Schweißstroms die Elektrodenspannung konstant zu halten, wobei ihr der Stromsteller oder die Stromregelung durch ihre fallende Kennlinie Grenzen setzt. Auf diese Weise wird eine vorteilhafte Anpassung des Schweißstroms an den augenblicklichen Strombedarf des Schweißprozesses ermöglicht.

Überraschenderweise hat sich gezeigt, daß mit den erfindungsgemäßen Verfahren eine deutliche Verbesserung des Schweißprozesses erreicht werden kann. Es kommt zu einer stärkeren Konzentration des Lichtbogens auch bei sehr niedrigen Strömen an der Elektrodenspitze und zu einer Verminderung der Lichtbogenstreuung. Einbrandkerben an den Flanken des Lichtbogens werden vermieden. Besonders beim WIG-, MIG- oder MAG-Schweißen erweisen sich die erfindungsgemäße Verfahren als sehr vorteilhaft.

Die erfindungsgemäße Verfahren eignen sich für getaktete Stromquellen und für Stromquellen, die einen Thyristor oder einen Transduktor verwenden.

Eine bevorzugte Ausgestaltung der erfindungsgemäßen Verfahren sieht weiterhin vor, daß der Eingang der Konstantspannungs-Regeleinrichtung im Leerlauf und bei Unterbrechung des Schweißstroms von der Elektrode getrennt wird. Dies hat zur Folge, daß der Stromsteller oder die Stromregelung den Schweißstrom auf den kleinsten Grenzwert begrenzt. Hierdurch wird sichergestellt, daß es bereits zu Beginn eines Schweißprozesses nicht zu einer zu hohen Stromentnahme kommen kann.

Eine zusätzliche Verbesserung des Schweißprozesses kann mit den erfindungsgemäßen Verfahren unter Verwendung einer Einrichtung zur automatischen Förderung des Schweißdrahtes dadurch erreicht werden, daß der Drahtvorschub in gleichsinniger Abhängigkeit von der Elektrodenspannung gesteuert oder geregelt wird. Unter gleichsinniger Abhängigkeit wird eine Abhängigkeit verstanden, bei der ein Anstieg der Eingangsgröße zu einem Anstieg der Ausgangsgröße führt. Die Abhängigkeit kann eine proportionale oder eine andere Charakteristik haben.

Eine verbesserte Vorrichtung zum Lichtbogen-Schmelzschweißen, insbesondere zum WIG-, MIG- oder MAG-Schweißen umfaßt erfindungsgemäß eine Stromquelle mit einer als Stromsteller oder Stromregelung ausgebildeten Einrichtung, die fallende Strom/Spannungs-Kennlinien erzeugt und einen Sollwert-Eingang zur Einstellung eines Schweißstromgrenzwerts aufweist, und eine Konstantspannungs-Regeleinrichtung, welche die Elektrodenspannung der Schweißelektrode erfaßt und in Abhängigkeit von der Elektrodenspannung ein Stellsignal erzeugt, das dem Sollwerteingang der Einrichtung der Stromquelle als Sollwert aufgegeben wird, wobei bei einer Abweichung der Elektrodenspannung von dem an der Konstantspannungs-Regeleinrichtung eingestellten Sollwert der Sollwert der Einrichtung derart beeinflusst wird, dass bei Überschreitung des Sollwerts der Elektrodenspannung der den Schweißstrom nach oben begrenzende Grenzwert gesenkt und bei Unterschreitung der Elektrodenspannung der Schweißstromgrenzwert erhöht wird..

Eine weitere erfindungsgemäße Vorrichtung zum Lichtbogen-Schmelzschweißen, insbesondere zum WIG-, MIG- oder MAG-Schweißen umfaßt eine Stromquelle mit einer Stromregelung, die fallende Strom/Spannungs-Kennlinien erzeugt und einen Sollwert-Eingang zur Regelung eines Schweißstromgrenzwerts aufweist, und eine Konstantspannungs-Regeleinrichtung, welche die Elektrodenspannung der Schweißelektrode erfaßt, und in Abhängigkeit von der Elektrodenspannung ein Regelsignal erzeugt, das dem Sollwerteingang der Stromregelung als Sollwert aufgegeben wird.

Weiterhin kann in dem Stromkreis zwischen Elektrode und Stromquelle ein Sensor angeordnet sein, der stromabhängig einen Arbeitskontakt schaltet, über den der Eingang der Konstantspannungs-Regeleinrichtung an den Elektrodenstromkreis angeschlossen ist.

Nach einem weiteren Vorschlag der Erfindung kann eine die Elektrodenspannung erfassende Vorschubeinrichtung vorgesehen sein, die den Vorschub des Schweißdrahtes in gleichsinniger Abhängigkeit von der Elektrodenspannung steuert oder regelt.

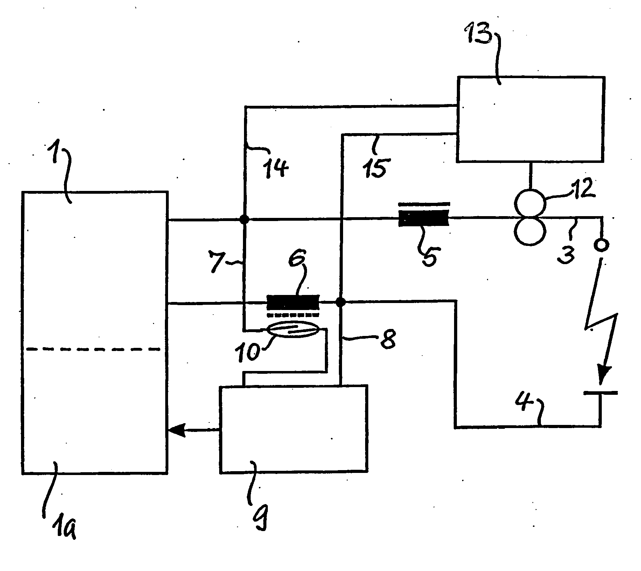

Die Erfindung wird nachfolgend anhand eines in der Zeichnung dargestellten Blockschaltbilds näher erläutert.

In dem Blockschaltbild ist mit 1 eine Stromquelle zu Erzeugung eines Schweißstroms bezeichnet, die mit einem Stromsteller 1 a ausgerüstet ist. Die Stromquelle 1 kann primär/sekundär getaktet sein und durch einen Thyristor oder Transduktor gesteuert werden. Die Regelcharakteristik der Stromquelle 1 ist spannungsweich, d.h. die stromabhängige Spannungskennlinie ist fallend. Die Stromquelle 1 ist über einen Leiter 2 an eine Elektrode 3 angeschlossen, die aus einem automatisch zuführbaren Schweißdraht besteht. Ein Masseleiter 4 verbindet das zu schweißende Werkstück mit der Stromquelle 1. In beiden Leitern 2, 4 befindet sich jeweils eine Drosselspule 5 bzw. 6.

Die Ausgangsspannung der Stromquelle 1 wird an den Leitern 2, 4 abgegriffen und über Anschlußleitungen 7, 8 einem Konstantspannungsregler 9 als Regelgröße zugeführt. In der Leitung 7 befindet sich ein als Arbeitskontakt ausgelegter Reedschalter 10, der durch das Feld der Drosselspule 6 geschaltet wird. Die Stellgröße des Konstantspannungsreglers 9 wird dem Stromsteller 1a der Stromquelle 1 als Sollwert zur Einstellung des Schweißstromgrenzwerts aufgegeben. Dies hat zur Folge, daß die Einstellung des von dem Stromsteller 1 a gestellten Schweißstromgrenzwerts in Abhängigkeit von der Stellgröße des Konstantspannungsreglers 9 verstellt wird.

Die automatische Schweißdrahtzuführung 12 ist mit einer Vorschubeinrichtung 13 ausgerüstet, die über Leitungen 14, 15 an den Ausgang der Stromquelle 1 angeschlossen ist und in Abhängigkeit von der Elektrodenspannung nach einer vorgegebenen Regelcharakteristik den Schweißdrahtvorschub steuert oder regelt.

Die beschriebene Anordnung hat folgende Wirkungsweise:

Beim Start eines Schweißprozesses ist vor der Lichtbogenzündung folgender Ausgangszustand gegeben: Der Spannungsausgang der Stromquelle 1 hat maximale Leerlaufspannung. Da kein Strom fließt, ist der Reedschalter 10 geöffnet. Hierdurch ist der Ist-Wert der dem Konstantspannungsregler 9 zugeführten Regelspannung gleich 0. Dies hat zur Folge, daß der Stromsteller 1a auf den kleinsten Schweißstromgrenzwert eingestellt ist.

Bei der Zündung des Lichtbogens bleibt die Leerlaufspannung so lange aktiv, bis es zu einem Stromfluß in den Leitungen 2, 4 kommt. In diesem Moment wird der Reedschalter 10 geschlossen und die Regelung des Konstantspannungsreglers 9 wird aktiv. Dieser ist bestrebt, im Rahmen der durch den gesamten Regelkreis gegebenen Regelcharakteristik die Spannung der Stromquelle 1 konstant zu regeln. Da die Ausgangsspannung der Stromquelle 1 von durch den Schweißprozeß verursachte Stromänderungen abhängig ist, ergibt sich ein Regelverhalten, das mit einem Verhalten bei hochohmigem Innenwiderstand der Stromquelle vergleichbar ist. Da es an einem hochohmigen und entsprechend verlustbehafteten Innenwiderstand jedoch fehlt, könnte man auch von einem virtuellen hochohmigen Innenwiderstand sprechen.

Durch die beschriebene Anordnung ergibt sich ein Verhalten, bei welchem eine Sollwertüberschreitung der Elektrodenspannung eine Erniedrigung des Schweißstromgrenzwerts und damit auch der verfügbaren Energie und eine Unterschreitung des Sollwerts der Elektrodenspannung eine Erhöhung des Schweißstromgrenzwerts und damit auch der verfügbaren Energie bewirkt. Dies hat, zur Folge, daß die Amplitude der Stromschwankungen an der Schweißelektrode erheblich reduziert wird und der Kurzschlußstrom auf einen niedrigen Maximalwert von beispielsweise 110 % des Nennstroms begrenzt werden kann. Das beschriebene Verfahren führt zu einer wesentlichen Verbesserung des Schweißprozesses. Es kommt nicht zu einer Lichtbogenstreuung und der Lichtbogen hat seine höchste Energiedichte direkt an der Elektrodenspitze. Der Lichtbogenrand ist weniger energiereich. Dies wirkt sich positiv auf die Nahtflanken der Schweißnaht aus und es entstehen keine Einbrandkerben. Die Zuverlässigkeit des Schweißprozesses und die Qualität des Schweißergebnisses können deutlich verbessert werden.

Analoge Ergebnisse werden erzielt, wenn der Stromsteller (1a) durch eine analog wirkende Stromregelung ersetzt wird, die für den Fachmann ohne Weiteres ausführbar ist.

Eine weitere Verbesserung des Schweißprozesses kann beim MIG- oder MAG-Schweißen durch die Vorschubregelung des Drahtfördersystems in gleichsinniger Abhängigkeit von der Schweißspannung bewirkt werden.

## Patentansprüche

1. Verfahren zur Beeinflussung des Lichtbogens beim Lichtbogen-Schmelzschweißen unter Verwendung einer Stromquelle (1) mit einer als Stromsteller (1 a) oder Stromregelung ausgebildeten Einrichtung, die fallende Strom/Spannungs-Kennlinien erzeugt, **dadurch gekenzeichnet, daß** die als Stromsteller oder Stromregelung ausgebildete Einrichtung einen Sollwerteingang zur Einstellung eines oberen Schweißstromgrenzwerts aufweist, wobei die Elektrodenspannung an der Schweißelektrode (3) von einer Konstantspannungs-Regeleinrichtung (9) erfaßt wird und von dieser in Abhängigkeit von der Elektrodenspannung ein Stellsignal erzeugt wird, das dem Sollwerteingang der Einrichtung der Stromquelle als Sollwert aufgegeben wird, wobei bei einer Abweichung der Elektrodenspannung von dem an der Konstantspannungs-Regel-einrichtung (9) eingestellten Sollwert der Sollwert der Einrichtung derart beeinflusst wird, dass bei Überschreitung des Sollwerts der Elektrodenspannung der den Schweißstrom nach oben begrenzende Grenzwert gesenkt und bei Unterschreitung der Etektrodenspannung der Schweißstromgrenzwert erhöht wird.

2. Verfahren nach Anspruch 1, **dadurch gekennzeichnet, daß** im Leerlauf und bei Unterbrechung des Schweißstroms der Eingang der Konstantspannungs-Regeleinrichtung von der Elektrode getrennt wird, so daß die Einrichtung der Stromquelle den kleinsten Schweißstromgrenzwert einstellt oder einregelt und die Stromstärke auf den kleinsten Grenzwert begrenzt.

3. Verfahren nach einem der Ansprüche 1 oder 2, **dadurch gekennzeichnet, daß** bei Verwendung einer Einrichtung zur automatischen Förderung des Schweißdrahtes (12) der Drahtvorschub in gleichsinniger Abhängigkeit von der Elektrodenspannung gesteuert oder geregelt wird.

4. Vorrichtung zum Lichtbogen-Schmelzschweißen, insbesondere zum WIG-, MIG- oder MAG-Schweißen umfassend eine Stromquelle (1) mit einer als Stromsteller (1 a) oder Stromregelung ausgebildeten Einrichtung, die fallende Strom/Spannungs-Kennlinien erzeugt **dadurch gekenzeichnet, daß** die als Stromsteller oder Stromregelung ausgebildete Einrichtung einen Sollwerteingang zur Einstellung eines oberen Schweißstromgrenzwerts aufweist, und eine Konstantspannungs-Regeleinrichtung (9), welche die Elektrodenspannung der Schweißelektrode (3) erfaßt und in Abhängigkeit von der Elektrodenspannung ein Stellsignal erzeugt, das dem Sollwerteingang der Einrichtung der Stromquelle als Sollwert aufgegeben wird, wobei bei einer Abweichung der Elektrodenspannung von dem an der Konstantspannungs-Regeleinrichtung (9) eingestellten Sollwert der Sollwert der Einrichtung derart beeinflusst wird, dass bei Überschreitung des Sollwerts der Elektrodenspannung der den Schweißstrom nach oben begrenzende Grenzwert gesenkt und bei Unterschreitung der Elektrodenspannung der Schweißstromgrenzwert erhöht wird.

5. Vorrichtung nach Anspruch 4, **dadurch gekennzeichnet, daß** in dem Stromkreis zwischen Elektrode (3) und Stromquelle (1) ein Sensor angeordnet (6) ist, der stromabhängig einen Arbeitskontakt (10) schaltet, über den der Eingang der Konstantspannungs-Regeleinrich tung (9) an den Elektrodenstromkreis angeschlossen ist.

6. Vorrichtung nach einem der Ansprüche 4 oder 5, **dadurch gekennzeichnet, daß** eine die Elektrodenspannung erfassende Vorschubeinrichtung (13) vorgesehen ist, die den Vorschub des Schweißdrahtes in gleichsinniger Abhängigkeit von der Elektrodenspannung steuert oder regelt.

## Claims

1. Method for influencing the arc during arc fusion welding by using a power source (1) comprising a device, which is formed as a current regulator (1a) or current control means and generates falling current/voltage characteristic curves, **characterised in that** the device which is formed as a current regulator or a current control means comprises a desired value input for setting an upper welding current threshold, the electrode voltage at the welding electrode (3) being detected by a constant voltage control unit (9) which generates a control signal, which is supplied to the desired value input of the power source device as a desired value, as a function of the electrode voltage, the desired value of the device being influenced in the event of deviation of the electrode voltage from the desired value set in the constant voltage control unit (9) in such a way that when the desired value of the electrode voltage is exceeded, the upper threshold for limiting the welding current is lowered, and when the electrode voltage is not attained, the welding current threshold is increased.

2. Method according to claim 1, **characterised in that** in the event of no-load operation and interruption of the welding current, the input of the constant voltage control unit is disconnected from the electrode in such a way that the power source device sets or adjusts the lowest possible welding current threshold and limits the electric current to the lowest possible threshold.

3. Method according to either claim 1 or claim 2, **characterised in that**, when using a device for automatically conveying the welding wire (12), the wire feed is controlled or adjusted as a function of the electrode voltage in the same direction as the change in electrode voltage.

4. Apparatus for arc fusion welding, in particular for GTAW, MIG or MAG welding, comprising a power source (1) with a device which is formed as a current regulator (1a) or a current control means and generates falling current/voltage characteristic curves, **characterised in that** the device which is formed as a current regulator or a current control means comprises a desired value input for setting an upper welding current threshold, and a constant voltage control unit (9), which detects the electrode voltage of the welding electrode (3) and generates a control signal, which is supplied to the desired value input of the power source device as a desired value, as a function of the electrode voltage, the desired value of the device being influenced in the event of deviation of the electrode voltage from the desired value set in the constant voltage control unit (9) in such a way that when the desired value of the electrode voltage is exceeded, the upper threshold for limiting the welding current is lowered and when the electrode voltage is not attained, the welding current threshold is increased.

5. Apparatus according to claim 4, **characterised in that** arranged in the circuit between the electrode (3) and the power source (1) is a sensor (6) which switches, in a current-dependent manner, a normally-open contact (10), via which the input of the constant voltage control unit (9) is connected to the electrode circuit.

6. Apparatus according to either claim 4 or claim 5, **characterised in that** a feed device (13) which detects the electrode voltage is provided and controls or adjusts the feed of the welding wire as a function of the electrode voltage in the same direction as the change in the electrode voltage.

## Revendications

1. Procédé pour influencer l'arc électrique pendant le soudage à l'arc en utilisant une source de courant (1) munie d'un dispositif, qui est réalisé sous la forme d'un actionneur de courant (1a) ou d'un régulateur de courant et qui génère des courbes caractéristiques courant/tension descendantes, **caractérisé en ce que** le dispositif réalisé sous la forme d'un actionneur de courant ou d'un régulateur de courant comporte une entrée de valeur de consigne pour le réglage d'une valeur limite supérieure du courant de soudage, la tension au niveau de l'électrode de soudage (3) étant mesurée par un dispositif de réglage de tension constante (9) et ce dernier générant un signal de réglage en fonction de la tension de l'électrode, lequel est transmis en tant que valeur de consigne à l'entrée de valeur de consigne du dispositif de la source de courant, sachant que lorsque la tension de l'électrode est différente de la valeur de consigne réglée par le dispositif de réglage de tension constante (9), la valeur de consigne du dispositif est influencée de telle sorte que la valeur limite, qui délimite vers le haut le courant de soudage, est diminuée lorsque la tension de l'électrode est supérieure à la valeur de consigne, et la valeur limite du courant de soudage est augmentée lorsque la tension de l'électrode est inférieure à la valeur de consigne.

2. Procédé selon la revendication 1, **caractérisé en ce que**, en cas de marche à vide ou en cas d'interruption du courant de soudage, l'entrée du dispositif de réglage de tension constante est séparée de l'électrode de telle sorte que le dispositif de la source de courant règle ou régule la plus petite valeur limite pour le courant de soudage et limite l'intensité du courant à la plus petite valeur limite.

3. Procédé selon la revendication 1 ou 2, **caractérisé en ce que**, en cas d'utilisation d'un dispositif pour amener automatiquement le fil de soudure (12), l'avance du fil est commandée ou réglée en fonction de la tension de l'électrode.

4. Dispositif pour le soudage à l'arc électrique, en particulier pour le soudage TIG, MIG ou MAG, comportant une source de courant (1) munie d'un dispositif qui est réalisé sous la forme d'un actionneur de courant (1a) ou d'un régulateur de courant et qui génère les courbes caractéristiques courant/tension descendantes, **caractérisé en ce que** le dispositif réalisé sous la forme d'un actionneur de courant ou d'un régulateur de courant comporte une entrée de valeur de consigne pour le réglage d'une valeur limite supérieure du courant de soudage, et un dispositif de réglage de tension constante (9), lequel mesure la tension de l'électrode de soudage (3) et génère un signal de réglage en fonction de la tension de l'électrode, lequel signal est transmis en tant que valeur de consigne à l'entrée de valeur de consigne du dispositif de la source de courant, sachant que lorsque la tension de l'électrode est différente de la valeur de consigne réglée par le dispositif de réglage de tension constante (9), la valeur de consigne du dispositif est influencée de telle sorte que la valeur limite qui délimite vers le haut le courant de soudage est diminuée lorsque la tension de l'électrode est supérieure à la valeur de consigne, et la valeur limite du courant de soudage est augmentée lorsque la tension de l'électrode est inférieure à la valeur de consigne.

5. Dispositif selon la revendication 4, **caractérisé en ce qu'**un capteur (6) est disposé dans le circuit de courant entre l'électrode (3) et la source de courant (1), lequel capteur, en fonction du courant, connecte un contact de travail (10) par l'intermédiaire duquel l'entrée du dispositif de réglage de tension constante (9) est raccordée au circuit de courant de l'électrode.

6. Dispositif selon la revendication 4 ou 5, **caractérisé en ce qu'**il est prévu un dispositif d'avance (13) qui mesure la tension de l'électrode et qui commande ou règle l'avance du fil de soudure en fonction de la tension de l'électrode.
